# EUROPÄISCHE PATENTSCHRIFT

(11) **EP 0 706 338 B1**
(45) Veröffentlichungstag und Bekanntmachung des Hinweises auf die Patenterteilung: **05.03.1997**
(21) Anmeldenummer: 94920944.9
(22) Anmeldetag: 16.06.1994
(51) Int. Cl.: A47C 7/46, F16C 1/14

(54) **VERSTELLVORRICHTUNG IN EINEM SITZ FÜR EINE IN EINER MIT DEM SITZ VERBINDBAREN LEHNE ANGEORDNETE BECKEN- UND/ODER LORDOSENSTÜTZE MIT EINER SIE VERBINDENDEN BOWDENZUGANORDNUNG**
ADJUSTING DEVICE ARRANGED IN A SEAT FOR A LUMBAR AND/OR LORDOTIC REGION SUPPORT ARRANGED IN A BACK-REST CONNECTABLE TO THE SEAT AND HAVING A CONNECTING BOWDEN CABLE ARRANGEMENT
DISPOSITIF DE DEPLACEMENT SITUE DANS UN SIEGE ET DESTINE A ACTIONNER UN SUPPPORT DE BASSIN ET/OU ANTILORDOSE, MONTE DANS UN DOSSIER ASSEMBLABLE AU SIEGE, ET COMPORTANT UN SYSTEME DE CABLE BOWDEN LES RELIANT

(30) Priorität: 01.07.1993 DE 4321985
(43) Veröffentlichungstag der Anmeldung: 17.04.1996
(73) Patentinhaber: AMEU MANAGEMENT CORP., Panama 5 (PA)
(72) Erfinder: KLINGLER, Knud, D-90491 Nürnberg (DE)
(74) Vertreter: Zellentin, Rüdiger
(86) Internationale Anmeldenummer: EP9401964
(87) Internationale Veröffentlichungsnummer: WO9501115

(56) Entgegenhaltungen:
- GB-A- 2 013 487
- US-A- 2 335 000
- US-A- 3 247 562

## Beschreibung

Die Erfindung betrifft eine Verstellvorrichtung in einem Sitz für eine in einer mit dem Sitz verbindbaren Lehne angeordnete Becken- und/oder Lordosenstütze mit einer sie verbindenden Bowdenzuganordnung, wobei die Verstellvorrichtung eine in einem Gehäuse geführte, axial bewegliche Gewindespindel, einen Gewindering und einen Verstellgriff enthält und das Gehäuse und die Gewindespindel je eine axiale miteinander fluchtende zentrale Bohrung für die Durchführung des Seilzugs der Bowdenzuganordnung aufweist, wobei die zentrale Bohrung in der Gewindespindel in einen zum Verstellgriff gerichteten Innenraum zur Aufnahme für den Nippel des einen Seilzugendes mündet.

Eine derartige Verstellvorrichtung ist aus der GB-A-2 013 487 bekannt und wird bei Lehnen von Sitzen eingesetzt, bei denen der Bedienungsgriff auch in der Lehne angeordnet ist. Vielfach ist jedoch im Bereich der Lehne kein Platz für derartige handverstellbare Bedienungsgriffe, die zur Bedienung auch Freiraum erfordern, so daß der Bedienungsgriff in den Sitz verlegt werden muß. Da in einer modernen Produktion die Lehne und der Sitz an verschiedenen Orten gefertigt werden, gibt es beim Zusammenbau von Lehne und Sitz Probleme, das eine Seilzugende durch den Bedienungsgriff hindurchzufädeln und dann zu verriegeln, was oft unter schwierigen räumlichen Verhältnissen zu geschehen hat und damit zeit- und kostenaufwendig ist.

Aufgabe der Erfindung ist es, eine Verstellvorrichtung der eingangs genannten Art dahingehend zu verbessern, daß das Einführen des Seilzugendes und dessen Verankerung in der axial beweglichen Gewindespindel bei vollständig vorgefertigter Bowdenzuganordnung ohne großen Montageaufwand möglich ist.

Diese Aufgabe wird durch eine Verstellvorrichtung mit den Merkmalen des Anspruchs 1 gelöst.

Vorteilhafte Ausgestaltungen der Erfindung sind den Unteransprüchen zu entnehmen.

Nachfolgend wird die Erfindung an einem Ausführungsbeispiel unter Bezug auf schematische Zeichnungen näher erläutert.
Es zeigt:
- Fig. 1: einen Schnitt durch eine Verstellvorrichtung in den das mit einem Nippel versehene Ende eines Seilzugs eingeführt wird;
- Fig. 2: das Gleiche wie in Fig. 1, wobei der Nippel und das Seilzugende sich in einer Arbeitsstellung befinden;
- Fig. 3: einen Ausschnitt aus der Gewindespindel mit einer Variante der Lagerung für einen Nippel des Seilzugendes.

Die Verstellvorrichtung gemäß Ausführungsbeispiel weist ein zweistufiges, zylindrisches Gehäuse 1 auf, in dem eine Gewindespindel 2 axial beweglich, jedoch drehfest auf einer Führung (nicht dargestellt) geführt ist. An der erweiterten Stufe la des Gehäuses 1 stützt sich ein Verstellgriff 3 ab, der mit einem in das Außengewinde der Gewindespindel 2 eingreifenden Innengewindering 4 versehen ist. Durch Drehen des Verstellgriffs 3 und damit des Gewinderings 4 wird die Gewindespindel 2 innerhalb des Gehäuses 1 axial bewegt.

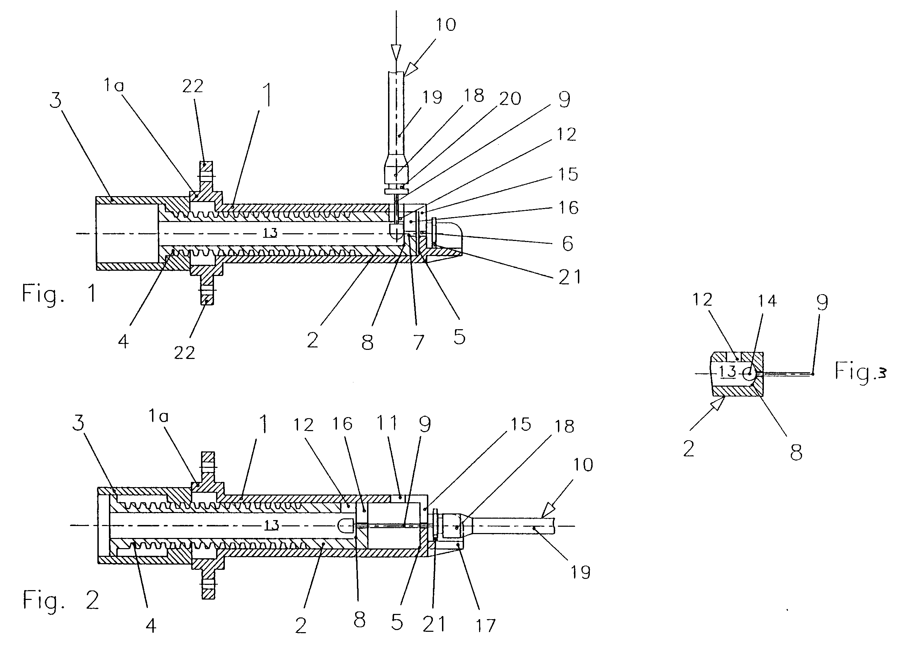

An dem dem Verstellgriff 3 entgegengesetzten Ende des Gehäuses 1 ist es durch einen Boden 5 mit einer zentralen Bohrung 6 verschlossen. Die zentrale Bohrung 6 fluchtet mit einer zentralen Bohrung 7 im Boden 8 der vorzugsweise hohlzylindrisch ausgeführten Gewindespindel 2. Die Bohrungen 6, 7 weisen einen Durchmesser auf, der den Durchgang des Seilzugs 9 einer Bowdenzuganordnung 10 gestattet. In der Seitenwand des Gehäuses 1 ist eine radial gerichtete Öffnung 11 und in der Gewindespindel 2 eine Querbohrung 12 ausgeführt, die sich in der in Fig. 1 dargestellten Position, bei der die Gewindespindel 2 vollständig in das Gehäuse 1 eingeschoben ist und ihre Böden 5, 8 aneinanderliegen, fluchten und einen gemeinsamen Durchgang bilden, der eine Verbindung von Außen in den Innenraum 13 der Gewindespindel 2 schafft. Die Öffnung 11 und die Querbohrung 12 weisen einen gleichen Durchmesser auf, der es erlaubt, dem an einem Ende des Seilzugs 9 befestigten Nippel 14 in den Innenraum 13 in der Gewindespindel 2 einzuführen, wie dies in Fig. 1 dargestellt ist.

Von der Öffnung 11 bzw. der Querbohrung 12 ausgehend ist ein jeweils in der zentralen Bohrung 6 bzw. 7 mündender Schlitz 15 bzw. 16 im Gehäuse 1 bzw. in der Gewindespindel 2 ausgeführt. Die beiden Schlitze 15 und 16 liegen in einer Ebene und fluchten miteinander. Die Breite der Schlitze 15 und 16 ist so gewählt, daß der Seilzug 9 mit geringem Spiel aus der in Fig. 1 dargestellten Lage in die in Fig.2 dargestellte Lage verschwenkt werden kann, in der der Seilzug 9 in den zentralen Bohrungen 6 bzw. 7 liegt.

Das Gehäuse 1 weist im Bereich seiner zentralen Bohrung 6 außen einen teilzylindrischen Vorsprung 17 auf, in den das verstärkte Ende 18 der Hülse 19 der Bowdenzuganordnung 10 eingeführt werden kann. Vorzugsweise weist das verstärkte Ende 18 eine Ringnut 20 auf, die als Schloß für einen innerhalb des teilzylindrischen Vorsprungs 17 ausgeführten teilringförmigen Riegel 21 dient und das Ende der Bowdenzughülse 19 axial unbeweglich am Gehäuse 1 festlegt. Die sich gegenüberliegenden freien Enden des teilzylindrischen Vorsprungs 17 weisen eine der Gestalt des verstärkten Endes 18 entsprechende Seitenwandöffnung auf, so daß der teilzylindrische Vorsprung 17 einen gerundeten U-förmigen Querschnitt aufweist. Vorzugsweise können die freien Seitenkanten der Seitenwandöffnung derart federnd ausgeführt sein, daß das verstärkte Ende 18 seitlich unter Druck in den teilzylindrischen Vorsprung 17 im Sinne einer Schnappverbindung eingeführt werden kann, wodurch ein Rausrutschen des verstärkten Endes 18 bei der Montage und dessen zentrale einen reibungslosen Durchgang des Seilzugs 9 in das Gehäuse 1 gewährleistende Anordnung sichergestellt wird.

Im in Fig. 1 und 2 dargestellten Ausführungsbeispiel sind die radiale Öffnung 11 und die Querbohrung 12 so ausgeführt, daß sie in ihrer fluchtenden Stellung direkt am die zentrale Bohrung 7 aufweisenden Boden 8 im Innenraum 13 der Gewindespindel 2 münden. Die Querbohrung 12 kann aber auch (siehe Fig. 3) um einige Millimeter in Richtung des Verstellgriffs 3 versetzt sein, da dann eine stärker geschlossene Halterung, eine Vertiefung für den eingeführten Nippel 14 gewährleistet wird, die ein Herausrutschen des Nippels 14 aufgrund von Verwindungen des Seilzugs 9 bei der Montage praktisch ausschließen.

Der Nippel 14 kann, wie in Fig. 1 und 2 dargestellt, eine gerade oder aber auch eine runde, gerundete (Fig.3) oder kegelige Auflagefläche aufweisen. Er kann auch mehrkantige Seiten- und/oder auch Anlageflächen aufweisen, die mit entsprechenden im Boden 8 und/oder den benachbarten Seitenwänden der Gewindespindel 2 ausgeführten Formen zusammenwirken können.

Die Verstellvorrichtung ist wie folgt zu montieren. Die Verstellvorrichtung ist mittels der an der Stufe la des Gehäuses ausgeführten Flansche 22 an einem Sitz befestigt. Nach dem Zusammenbau von Sitz und Lehne wird das den Nippel 14 tragende Ende des Seilzugs 9 aus der Lehne herausgeführten Bowdenzuganordnung 10 etwas aus der Bowdenzughülse 19 herausgezogen und durch die Bohrung 11 im Gehäuse 1 und durch die Querbohrung 12 in der Gewindelspindel 2 in deren Innenraum 13 eingefügt (siehe Fig. 1). Nun wird der Seilzug 9 mit dem verstärkten Ende 18 der Bowdenzughülse 19 um etwa 90 Grad so weit verschwenkt, daß der Seilzug 9 durch die Schlitze 15 und 16 gleitend in die zentralen Bohrungen 6 und 7 gelangt und das verstärkte Ende 18 der Bowdenzughülse 19 in den teilzylindrischen Vorsprung 17 derart einschnappt, daß der Riegel 21 in die Ringnut 20 eingreift. Damit ist die Montage auf einfache und schnelle Weise ohne zusätzliche Werkzeuge möglich. Durch Drehen des Verstellgriffs 3 kann die Gewindespindel 2 innerhalb des Gehäuses 1 axial bewegt werden (siehe auch die Stellung in Fig. 2) und dadurch auch das Teil verstellen, das mit dem anderen Ende der Bowdenzuganordnung verbunden ist, das z.B. ein Wölbelement in der Lehne sein kann, dessen Wölbung oder Höhenlage verstellt werden soll.

## Patentansprüche

1. Verstellvorrichtung in einem Sitz für eine in einer mit dem Sitz verbindbaren Lehne angeordnete Becken- und/oder Lordosenstütze mit einer sie verbindenden Bowdenzuganordnung (10), wobei die Verstellvorrichtung eine in einem Gehäuse (1) geführte, axial bewegliche Gewindespindel (2), einen Gewindering (4) und einen Verstellgriff (3) enthält und das Gehäuse (1) und die Gewindespindel (2) je eine axiale miteinander fluchtende zentrale Bohrung (6, 7) für die Durchführung des Seilzugs (9) der Bowdenzuganordnung (10) aufweist, wobei die zentrale Bohrung (7) in der Gewindespindel (2) in einen zum Verstellgriff (3) gerichteten Innenraum (13) zur Aufnahme für den Nippel (14) des einen Seilzugendes mündet,
dadurch gekennzeichnet, daß
in der Seitenwand des Gehäuses (1) eine radiale Öffnung (11) und in der Seitenwand der Gewindespindel (2) eine im Bereich der Halterung für den Nippel (14) mündende Querbohrung (12) ausgeführt sind, wobei die radiale Öffnung (11) mit der Querbohrung (12) in einer gegenseitigen Stellung des Gehäuses (1) und der Gewindespindel (2) miteinander fluchten und einen gemeinsamen Durchgang bilden, der die Durchführung des Nippels (14) ermöglicht, wobei die Öffnung (11) und die Querbohrung (12) jeweils durch einen in einer gemeinsamen Ebene ausgeführten Durchgang des Seilzugs (9) ermöglichenden Schlitz (15 bzw. 16) mit der zentralen Bohrung (6 bzw. 7) verbunden sind.

2. Verstellvorrichtung nach Anspruch 1,
dadurch gekennzeichnet, daß
das Gehäuse (1) einen zur Bowdenzughülse (19) gerichteten axialen, mindestens teilzylindrischen, zur Aufnahme des Endes der Bowdenzughülse (19) dienenden Vorsprung (17) aufweist.

3. Verstellvorrichtung nach Anspruch 2,
dadurch gekennzeichnet, daß
das Ende der Bowdenzughülse (19) eine zylindrische Verstärkung (18) mit einem Schloß und der teilzylindrische Vorsprung (17) einen in das Schloß einführbaren Riegel aufweist.

4. Verstellvorrichtung nach Anspruch 2 oder 3,
dadurch gekennzeichnet, daß
der teilzylindrische Vorsprung (17) mit der Bowdenzughülse (19) durch eine Schnappverbindung verbindbar ist.

5. Verstellvorrichtung nach einem der Ansprüche 1 bis 4,
dadurch gekennzeichnet, daß
die Querbohrung (12) in einem Abstand vom Boden (8) der Gewindespindel (2) mündet, der mindestens der gesamten Länge des Nippels (14) entspricht.

## Claims

1. Adjusting device arranged in a seat for a lumbar and/or lordotic region support arranged in a back-rest connectable to the seat and having a connecting Bowden cable arrangement (10), in which the adjusting device comprises an axially movable threaded shaft (2) guided in a housing (1), a threaded ring (4) and an adjusting handle (3) and the housing (1) and the threaded shaft (2) have mutually aligned axial central bores (6, 7) through which the sheathed cable (9) of the Bowden cable arrangement (10) is guided, whereby the central bore (7) in the threaded shaft (2) opens into an interior cavity (13) oriented towards the adjusting handle (3) for receiving the fitting (14) for one end of the sheathed cable, characterised in that a radial opening (11) is provided in the side wall of the housing (1) and a transverse bore (12) which opens in the region of the holder of the fitting (14) is provided in the side wall of the threaded shaft (2), whereby the radial opening (11) is aligned with the transverse bore (12) when the housing (1) and the threaded shaft (2) are placed opposite to one another and form a common passage which permits the fitting (14) to be guided therethrough, whereby the opening (11) and the transverse bore (12) are linked to the central bore (6 or 7) by a slit (15 or 16) which permits the sheathed cable (9) to be threaded through in a common plane

2. Adjusting device according to claim 1, characterised in that the housing (1) has an axial at least partly cylindrical projection (17) aligned relative to the Bowden cable sleeve (19) for mounting the end of the Bowden cable sleeve (19).

3. Adjusting device according to claim 2, characterised in that the end of the Bowden cable sleeve (19) has a cylindrical reinforcement (18) with a lock and the partly cylindrical projection (17) comprises a bar insertable into the lock.

4. Adjusting device according to claim 2 or 3, characterised in that the partly cylindrical projection (17) can be connected to the Bowden cable sleeve (19) by a snap connection.

5. Adjusting device according to one of claims 1 to 4, characterised in that the transverse bore (12) opens at a distance from the base (8) of the threaded shaft (2) which corresponds at least to the entire length of the fitting (14).

## Revendications

1. Dispositif de déplacement situé dans un siège et destiné à actionner un support de bassin et/ou antilordose, monté dans un dossier pouvant être assemblé au siège, et comportant un système de câble Bowden (10) les reliant, lequel dispositif de déplacement comprend une broche filetée (2) mobile axialement et guidée dans un corps (1), un anneau fileté (4) et une poignée de réglage (3), le corps (1) et la broche filetée (2) présentant chacun un trou central axial (6, 7) alignés l'un avec l'autre pour le passage du câble de traction (9) du système de câble Bowden (10), dans lequel le trou central (7) de la broche filetée (2) débouche dans un espace intérieur (13) dirigé vers la poignée de réglage (3) pour recevoir la tête (14) d'une première extrémité du câble de traction, caractérisé en ce qu'une ouverture radiale (11) est pratiquée dans la paroi latérale du corps (1), un trou transversal (12) débouchant dans la région du support pour la tête (14) étant ménagé dans la paroi latérale de la broche filetée (2), l'ouverture radiale (11) étant alignée avec le trou transversal (12) dans une position réciproque du corps (1) et de la broche filetée (2) et formant ensemble un orifice commun, qui permet le passage de la tête (14), l'ouverture (11) et le trou transversal (12) étant respectivement reliés au trou central (6, respectivement 7) par une fente (15, respectivement 16) permettant le passage du câble de traction (9) et pratiquée dans un plan commun.

2. Dispositif de déplacement suivant la revendication 1, caractérisé en ce que le corps (1) présente une saillie axiale (17), au moins partiellement cylindrique, dirigée vers la gaine (19) du câble Bowden, et servant à recevoir l'extrémité de la gaine (19) du câble Bowden.

3. Dispositif de déplacement suivant la revendication 2, caractérisé en ce que l'extrémité de la gaine (19) du câble Bowden présente un renflement cylindrique (18) avec une serrure, et en ce que la saillie partiellement cylindrique (17) présente un verrou qui peut être inséré dans la serrure.

4. Dispositif de déplacement suivant la revendication 2 ou 3, caractérisé en ce que la saillie partiellement cylindrique (17) peut être reliée à la gaine (19) du câble Bowden par une liaison à ressort.

5. Dispositif de déplacement suivant l'une quelconque des revendications 1 à 4, caractérisé en ce que le trou transversal (12) débouche à une distance du fond (8) de la broche filetée (2), laquelle distance correspond au moins à la longueur totale de la tête (14).
